# EUROPÄISCHE PATENTANMELDUNG

(11) **EP 1 032 235 A2**
(43) Veröffentlichungstag der Anmeldung: **30.08.2000**
(21) Anmeldenummer: 00440032.1
(22) Anmeldetag: 04.02.2000
(51) Int. Cl.: H04Q 7/38

(54) **Verfahren zum Erbringen von Dienstfunktionen in einem Telekommunikationsnetzwerk**

(30) Priorität: 22.02.1999 DE 19907503
(71) Anmelder: ALCATEL, 75008 Paris (FR)
(72) Erfinder: Felbecker-Janho, Heike, 70825 Korntal-Münchingen (DE)
(74) Vertreter: Dreiss, Fuhlendorf, Steimle & Becker

(57) **Zusammenfassung**

Die Erfindung betrifft ein Verfahren zum Erbringen von Dienstfunktionen in einem Telekommunikationsnetzwerk (1) mit Hilfe eines Endgeräts (2), das mit einem Zusatzmodul (3) versehen ist. Um dem Endgerät (2) durch das Zusatzmodul (3) unter Ausnutzung der Übertragungsmöglichkeiten über das Telekommunikationsnetzwerk (1) eine Vielzahl von zusätzlichen, über den reinen Aufbau einer Sprachverbindung hinausgehende, Dienstfunktionen (12) zur Verfügung stellen zu können, schlägt die Erfindung ein Verfahren vor, das gekennzeichnet ist durch die nachfolgenden Schritte:
- Erfassung (5) physikalischer Daten (4) durch das Zusatzmodul (3),
- Übertragung (6) der Daten (4) an das Endgerät (2),
- Senden (8) der Daten (4) an eine Steuerungseinrichtung (7) des Telekommunikationsnetzwerks (1) über das Telekommunikationsnetzwerk (1),
- Senden (10) eines Auftrags zur Erbringung (11) einer Dienstfunktion (12) an eine Diensterbringungseinrichtung (9) durch die steuerungseinrichtung (7) beim Vorliegen einer vorbestimmten Konstellation der empfangenen Daten (4),
- Erbringen (11) der Dienstfunktion (12) durch die Diensterbringungseinrichtung (9).

## Beschreibung

Die vorliegende Erfindung betrifft ein Verfahren zum Erbringen von Dienstfunktionen in einem Telekommunikationsnetzwerk mit Hilfe eines Endgeräts, das mit einem Zusatzmodul versehen ist. Die Erfindung betrifft außerdem ein Endgerät für den Einsatz in einem Telekommunikationsnetzwerk, mit einer Aufnahmeeinrichtung für ein Zusatzmodul, mit dem physikalische Daten erfaßt werden können. Die Erfindung betrifft des weiteren eine Steuerungseinrichtung eines Telekommunikationsnetzwerks. Schließlich betrifft die Erfindung eine Diensterbringungseinrichtung zum Erbringen einer Dienstfunktion.

Ein Verfahren und ein Endgerät der eingangs genannten Art sind aus der DE 41 41 382 A1 bekannt. Dort wird ein Endgerät offenbart, das mit verschiedenen Zusatzmoduln ausgestattet ist. Das Endgerät ist als ein drahtloses Telefon ausgebildet. Die Zusatzmoduln sind bspw. als ein Taschenrechner, als ein Diktiergerät, als ein Gerät zur Überwachung medizinischer Funktionen eines Benuters des Endgeräts oder mechanischer Anlagen, als eine Uhr, als eine Schnittstelle oder ein Modem zur Übertragung von Daten, als ein Fernseh- oder Radioempfänger, als ein Sender zum Bedienen von fernbedienbaren Geräten oder Anlagen, als ein Ultraschallsensor zur Abstandsmessung, als ein Erschütterungssensor zum Auslösen einer Alarmanlage, als eine Lampe oder als eine Vorrichtung zur Bestimmung der geografischen Ortskoordinaten des Zusatzmoduls ausgebildet. Durch diese Zusatzmodule kann das Endgerät mit umfangreichen Zusatzfunktionen ausgestattet werden. Die Zusatzmodule arbeiten alle als eigenständige Geräte, die zum Teil zwar derart in das Endgerät integriert sind, daß sie bestimmte Bauteile des Endgeräts (z. B. Anzeigeeinheit, Tastatur) gemeinsam nutzen, die Zusatzmodule arbeiten jedoch unabhängig von dem Telekommunikationsnetzwerk und machen von den Funktion des Telekommunikationsnetzwerks keinen Gebrauch.

Aus der DE 197 02 895 C1 ist ein Endgerät eines mit einem Gesprächskanal und einem separaten Datenkanal betriebenen Telekommunikationsnetzwerks mit einem Zusatzmodul bekannt, das als eine Vorrichtung zur Bestimmung der geografischen Ortskoordinaten des Zusatzmoduls ausgebildet ist. Die Ortskoordinaten werden zunächst an das Endgerät übermittelt und dann über den Datenkanal von dem Endgerät an eine Steuerungseinrichtung des Telekommunikationsnetzwerks gesendet. Die Steuerungseinrichtung überprüft, ob für die übermittelten Ortskoordinaten relevante Informationen vorliegen. Falls keine relevanten Informationen vorliegen, wird an den Benutzer eine entsprechende Sprachnachricht ausgegeben. Falls relevante Informationen vorliegen, wird eine Sprachverbindung über den Gesprächskanal von der Steuerungseinrichtung zu dem Benutzer des Endgeräts hergestellt. Dem Benutzer wird eine Abrufadresse mitgeteilt, unter der er die relevanten Informationen abrufen kann. Bei diesem bekannten Endgerät arbeitet das Zusatzmodul zwar mit dem Telekommunikationsnetzwerk zusammen und kommuniziert mit der Steuerungseinrichtung des Telekommunikationsnetzwerks. Allerdings besteht die Dienstfunktion, die von der Steuerungseinrichtung des Telekommunikationsnetzwerks erbracht werden kann, lediglich in einer Sprachverbindung zwischen der Steuerungseinrichtung und dem Endgerät. An die Erbringung weiterer Dienstfunktionen durch die Steuerungseinrichtung, die über eine Sprachverbindung hinausgehen, ist nicht gedacht.

Deshalb ist es eine Aufgabe der vorliegenden Erfindung, ein Verfahren der eingangs genannten Art dahingehend auszugestalten und weiterzubilden, daß dem Endgerät durch das Zusatzmodul unter Ausnutzung der Übertragungsmöglichkeiten über das Telekommunikationsnetzwerk eine Vielzahl von zusätzlichen, über den reinen Aufbau einer Sprachverbindung hinausgehende, Dienstfunktionen zur Verfügung gestellt werden können.

Zur Lösung dieser Aufgabe schlägt die Erfindung ausgehend von dem Verfahren der eingangs genannten Art ein Verfahren vor, das gekennzeichnet ist durch die nachfolgenden Schritte:
- Erfassung physikalischer Daten durch das Zusatzmodul,
- Übertragung der Daten an das Endgerät durch das Zusatzmodul,
- Empfang der Daten durch das Endgerät,
- Senden der Daten an eine Steuerungseinrichtung des Telekommunikationsnetzwerks über das Telekommunikationsnetzwerk durch das Endgerät,
- Empfang der Daten durch die Steuerungseinrichtung
- Senden eines Auftrags zur Erbringung einer Dienstfunktion an eine Diensterbringungseinrichtung durch die Steuerungseinrichtung beim Vorliegen einer vorbestimmten Konstellation der empfangenen Daten,
- Empfang des Auftrags durch die Diensterbringungseinrichtung, und
- Erbringen der Dienstfunktion durch die Diensterbringungseinrichtung.

Bei dem erfindungsgemäßen Verfahren erfaßt das Zusatzmodul des Endgeräts zunächst physikalische Daten. Diese physikalischen Daten können beliebig ausgebildet sein. Aus dem Stand der Technik ist eine Vielzahl von Sensoren zur Detektion und Erfassung der unterschiedlichsten physikalischen Zustände bekannt.

Das Zusatzmodul ist vorzugsweise an dem Endgerät befestigt oder sogar in dieses integriert, so daß der Benutzer des Endgeräts nach wie vor nur das eine Endgerät und nicht auch noch eine Vielzahl von zusätzlichen Zusatzmoduln umhertragen muß. Das Zusatzmodul kann auswechselbar, bspw. mittels einer Steckverbindung, oder auch fest mit dem Endgerät verbunden sein. Die Energieversorgung des Zusatzmoduls erfolgt vorzugsweise über die Energieversorgung des Endgeräts. Vorteilhafterweise bedient sich das Zusatzmodul auch bestimmter Bauteile des Endgeräts, bspw. der Tastatur zur Eingabe von Daten oder Befehlen in das Zusatzmodul, oder der Anzeigeeinheit zur Ausgabe von Daten oder Informationen aus dem Zusatzmodul.

Die von dem Zusatzmodul erfaßten physikalischen Daten werden von dem Zusatzmodul an das Endgerät übertragen, das die Daten empfängt. Dann werden die Daten durch das Endgerät an eine Steuerungseinrichtung des Telekommunikationsnetzwerks über das Telekommunikationsnetzwerk gesendet. Das hat den Vorteil, daß das Zusatzmodul keine eigene Sendeeinheit benötigt, um Daten an eine übergeordnete Steuerungseinrichtung zu senden. Vielmehr kann es die Sendeeinheit des Endgeräts mitbenutzen. Falls es sich bei dem Endgerät um ein Mobiltelefon nach dem GSM-Standard in einem mit einem Gesprächskanal und einem separaten Datenkanal betriebenen Mobilfunknetzwerk handelt, werden die physikalischen Daten vorzugsweise über den Datenkanal an die Steuerungseinrichtung übertragen.

Das Telekommunikationsnetzwerk ist vorzugsweise als ein Intelligentes Netzwerk (IN) ausgebildet. Die Steuerungseinrichtung ist bspw. als ein Computer ausgebildet, der in das IN integriert ist. Die Steuerungseinrichtung steuert bestimmte Netzwerkfunktionen des IN.

Die Steuerungseinrichtung empfängt die Daten und sendet einen Auftrag zur Erbringung einer bestimmten Dienstfunktion an eine Diensterbringungseinrichtung, falls eine vorbestimmte Konstellation der empfangenen Daten vorliegt. Die Einstellung der Konstellation, die das Aussenden eines solchen Auftrags zur Erbringung einer bestimmten Dienstfunktion bewirkt, kann vorzugsweise von dem Benutzer des Endgeräts eingestellt werden. Die Einstellungen können entweder unmittelbar an dem Zusatzmodul oder aber auch mittelbar über das Endgerät bzw. über dessen Tastatur vorgenommen werden. Die Einstellungen werden dann an die Steuerungseinrichtung übermittelt und dort gespeichert.

Die Diensterbringungseinrichtung kann ebenfalls in das Telekommunikationsnetzwerk eingebunden sein. In diesem Fall kann die Steuerungseinrichtung die Diensterbringungseinrichtung über das Telekommunikationsnetzwerk erreichen. Es gibt vielfältige Möglichkeiten, wie die Diensterbringungseinrichtung ausgebildet ist. Entscheidend ist, daß die Diensterbringungseinrichtung einfachere Dienstfunktionen erbringen kann, wie bspw. die Herstellung einer Sprachverbindung zu dem Endgerät und die Übermittlung bestimmter Informationen an den Benutzer des Endgeräts. Die Diensterbringungseinrichtung kann aber auch wesentlich komplexere Dienstfunktionen erbringen, wie bspw. die Benachrichtigung einer Notrufzentrale, die Benachrichtigung bestimmter Personen oder die Übermittlung bestimmter Nachrichten an einen ausgewählten Kreis von Endgerätebenutzern. Mit dem Auftrag zur Erbringung einer bestimmten Dienstfunktion können auch die von dem Zusatzmodul erfaßten physikalischen Daten an die Diensterbringungseinrichtung übermittelt werden. Wenn die physikalischen Daten bspw. als die geografischen Ortskoordinaten des Zusatzmoduls ausgebildet sind, wäre es möglich, die Notrufzentrale zu benachrichtigen und gleichzeitig die Ortskoordinaten des Zusatzmoduls, die üblicherweise der Position des Benutzers des Endgeräts entsprechen, zu übermitteln. Die Dienstfunktionen, die von der Diensterbindungseinrichtung erbracht werden können, werden vorzugsweise zumindest zum Teil von dem Benutzer des Endgeräts eingestellt. Die Einstellungen können entweder unmittelbar an dem Zusatzmodul oder aber auch mittelbar über das Endgerät bzw. über dessen Tastatur vorgenommen werden. Die Einstellungen werden dann an die Steuerungseinrichtung übermittelt und dort gespeichert.

Gemäß einer vorteilhaften Weiterbildung der vorliegenden Erfindung wird vorgeschlagen, daß die empfangenen physikalischen Daten in der Steuerungseinrichtung mit Daten verglichen werden, die in dem Telekommunikationsnetzwerk gespeichert sind und auf die die Steuerungseinrichtung Zugriff hat, um festzustellen, ob eine vorbestimmte Konstellation der empfangenen Daten vorliegt. Die Daten können entweder unmittelbar an dem Zusatzmodul oder aber auch mittelbar über das Endgerät bzw. über dessen Tastatur eingegeben werden. Die eingegebenen Daten werden dann in das Telekommunikationsnetzwerk übermittelt und dort gespeichert. Vorzugsweise werden die Daten in einer Speichereinheit der Steuerungseinrichtung gespeichert.

Gemäß einer bevorzugten Ausführungsform der Erfindung wird vorgeschlagen, daß die geografischen Ortskoordinaten des Zusatzmoduls als physikalische Daten erfasst werden. Die geografischen Ortskoordinaten können bspw. durch Anpeilen von GPS-Satelliten ermittelt werden. Zum Erfassen der Ortskoordinaten kann ein Empfänger für GPS-Signale dienen. Die geografischen Ortskoordinaten können dann später für die Erbringung bestimmter Dienstfunktionen wichtig sein, bspw. zur genauen Ortung eines Notrufs. Außerdem wäre es denkbar, den Ursprung eines Alarmrufs, der bspw. durch einen Diebstahl eines Kraftfahrzeugs ausgelöst wurde, genau zu orten. Als Dienstfunktion könnte die Diensterbringungseinrichtung dann bspw. die nächstgelegene Polizeidienststelle über den Diebstahl informieren.

Gemäß einer weiteren bevorzugten Ausführungsform der Erfindung wird vorgeschlagen, daß Erschütterungen des Zusatzmoduls als physikalische Daten erfasst werden. Zum Erfassen von Erschütterungen kann bspw. ein Beschleunigungssensor eingesetzt werden. Die erfassten Erschütterungen werden an die Steuerungseinrichtung übermittelt. Dort wird überprüft, ob die Erschütterungen einen vorbestimmten Wert übersteigen. Falls dies der Fall ist, geht die Steuerungseinrichtung davon aus, daß das Zusatzmodul und damit auch der Benutzer des Endgeräts in eine Lawine geraten sind. Die Steuerungseinrichtung sendet einen Auftrag an die Diensterbringungseinrichtung, daß bspw. ein Notruf an die entsprechende Bergwachtstelle abgesetzt werden soll.

Gemäß noch einer weiteren Ausführungsform der vorliegenden Erfindung wird vorgeschlagen, daß Umweltdaten als physikalische Daten erfasst werden. Die Umweltdaten können bspw. mittels eines Gassensors erfaßt werden. Ein Gassensor kann die Konzentration bestimmter Gase in der Umgebungsluft erfassen. Die erfassten Umweltdaten könnten in regelmäßigen Abständen an die Steuerungseinrichtung übermittelt werden. Falls eine Vielzahl von Endgeräten über derartig ausgestattete Zusatzmodule verfügen, könnte eine flächendeckende Überwachung von Umweltdaten ermöglicht werden. Bei der Steuerungseinrichtung könnten die einkommenden Umweltdaten analysiert werden und ggf. geeignete Maßnahmen eingeleitet werden.

Gemäß einer anderen vorteilhaften Ausführungsform der Erfindung werden Wetterdaten als physikalische Daten erfasst. Die Wetterdaten könnten bspw. mittels eines Thermometers, eines Barometers oder eines Hygrometers erfaßt werden. Falls eine Vielzahl von Endgeräten über derartig ausgestattete Zusatzmodule verfügen, könnte eine flächendeckende Überwachung des Wetters ermöglicht werden. Auf diese Weise könnte die Wettervorhersage verbessert und es könnten frühzeitig geeignete Gegenmaßnahmen, bspw. eine Sturmwarnung, veranlaßt werden.

Gemäß einer weiteren bevorzugten Ausführungsform werden medizinische Daten eines Benutzers des Endgeräts als physikalische Daten erfaßt. Als medizinische Daten werden bspw. der Herzschlag, der Blutdruck, der Blutzuckergehalt oder der Sauerstoffgehalt im Blut des Benutzers des Endgeräts oder einer anderen Person erfaßt. Die medizinischen Daten werden in regelmäßigen Abständen an die Steuerungseinrichtung gesendet. Dort werden sie mit Sollwerten verglichen. Falls die erfaßten medizinischen Daten von den Sollwerten über einen bestimmten Toleranzbereich hinaus abweichen, sendet die Steuerungseinrichtung einen Auftrag an die Diensterbringungseinrichtung, die zuständige Notrufzentrale zu benachrichtigen. Dadurch wird insbesondere bei älteren oder gesundheitlich gefährdeten Personen eine frühzeitige Erkennung von Krankheiten ermöglicht. Vorzugsweise werden der Notrufzentrale auch weitere physikalische Daten, bspw. die geografischen Ortskoordinaten des Zusatzmoduls und damit auch des Benutzers des Endgeräts, mitgeteilt.

Gemäß einer anderen bevorzugten Weiterbildung der Erfindung wird vorgeschlagen, daß als Dienstfunktion ein Kontrollanruf an einen weiteren Benutzer eines weiteren Endgeräts in dem Bereich, in dem sich das Zusatzmodul befindet, ausgeführt wird. Diese Dienstfunktion ist gewissermaßen eine Vorstufe zur Auslösung eines Notrufsignals oder zur Benachrichtigung einer Notrufzentrale. Werden bspw. Erschütterungen des Zusatzmoduls als physikalische Daten erfasst und an die Steuerungseinrichtung gesendet, geht die Steuerungseinrichtung davon aus, daß der Benutzer des Endgeräts in eine Lawine geraten ist, falls die Erschütterungswerte einen bestimmten Toleranzbereich überschreiten. Bevor die Steuerungseinrichtung nun der Diensterbringungseinrichtung den Auftrag sendet, ein Notrufsignal auszulösen, kann sie dieser zunächst den Auftrag erteilen, einen Kontrollanruf an einen oder mehrere weitere Benutzer weiterer Endgeräte in dem Bereich, in dem sich das Zusatzmodul befindet, zu tätigen. Antworten diese weiteren Benutzer nicht auf den Kontrollanruf, kann davon ausgegangen werden, daß in dem Bereich, in dem sich das Zusatzmodul befindet, tatsächlich eine Lawine niedergegangen ist.

Gemäß einer anderen bevorzugten Ausführungsform der Erfindung wird als Dienstfunktion eine Notrufzentrale benachrichtigt.

Gemäß einer weiteren vorteilhaften Ausführungsform der vorliegenden Erfindung werden als Dienstfunktion Verkehrsinformationen bezüglich des Bereiches, in dem sich das Zusatzmodul befindet, übermittelt. Dazu ist es erforderlich, daß das Zusatzmodul die geografischen Ortskoordinaten des Zusatzmoduls erfaßt und an die Steuerungseinrichtung des Telekommunikationsnetzwerks sendet. Die Verkehrsinformationen können ganz allgemein sämtliche Haupt- und Nebenstraßen in einem bestimmten Umkreis um den Bereich herum, in dem sich das Zusatzmodul befindet, umfassen. Es ist aber auch denkbar, daß die geografischen Ortskoordinaten des Zusatzmoduls zu mehreren zeitlich beabstandeten Zeitpunkten erfaßt und an die Steuerungseinrichtung des Telekommunikationsnetzwerks gesendet werden. Daraus kann die Steuerungseinrichtung die Bewegungsrichtung, in der Regel die Fahrtrichtung, des Benutzers des Endgeräts ermitteln und nur diejenigen Verkehrsinformationen übermitteln, die in der Bewegungsrichtung des Benutzers liegen. Es ist des weiteren denkbar, daß die Steuerungseinrichtung aus den geografischen Ortskoordinaten die Straße ermittelt, auf der der Benutzer des Endgeräts fährt, indem die geografischen Ortskoordinaten mit einer digitalisierten Straßenkarte verglichen werden. In diesem Fall können die Verkehrsinformationen Straße umfassen, auf der der Benutzer des Endgeräts gerade fährt. Die Verkehrsinformationen wird vorzugsweise als eine Textnachricht an das Endgerät des Benutzers übermittelt.

Gemäß einer anderen vorteilhaften Weiterbildung der vorliegenden Erfindung wird vorgeschlagen, daß als Dienstfunktion ein Zugfahrplan in dem Bereich, in dem sich das Zusatzmodul befindet, übermittelt wird. Auch für diese Dienstfunktion ist es erforderlich, daß das Zusatzmodul die geografischen Ortskoordinaten des Zusatzmoduls erfaßt und an die Steuerungseinrichtung des Telekommunikationsnetzwerks sendet. Durch Vergleich der geografischen Ortskoordinaten mit einer digitalisierten Landkarte kann die dem Zusatzmodul nächstliegende Stadt bzw. der nächstliegende Bahnhof ermittelt werden. Von diesem Bahnhof kann kann der Zugfahrplan an den Benuter des Endgeräts übermittelt werden. Der Zugfahrplan wird vorzugsweise als eine Textnachricht an das Endgerät des Benutzers übermittelt.

Gemäß einer bevorzugten Ausführungsform werden als Dienstfunktion allgemeine Informationen über den Bereich, in dem sich das Zusatzmodul befindet, übermittelt. Auch für diese Dienstfunktion ist es erforderlich, daß das Zusatzmodul die geografischen Ortskoordinaten des Zusatzmoduls erfaßt und an die Steuerungseinrichtung des Telekommunikationsnetzwerks sendet. Die allgemeinen Informationen sind bspw. Hinweise über Sehenswürdigkeiten oder Hinweise über Speise- oder Übernachtungsmöglichkeiten in dem betreffenden Bereich.

Gemäß einer besonders vorteilhafen Weiterbildung der vorliegenden Erfindung wird vorgeschlagen, daß als Dienstfunktion bestimmte Daten auf einer Anzeigeeinheit des Endgeräts angezeigt werden. Die Daten, die auf der Anzeigeeinheit angezeigt werden können, sind insbesondere die oben genannten Verkehrsinformationen, der Zugfahrplan oder allgemeine Informationen. Die Daten können aber auch einen ganz anderen Inhalt haben, der hier nicht ausdrücklich aufgeführt ist. Die Anzeige der Daten auf einer Anzeigeeinheit hat den Vorteil, daß der Benutzer des Endgeräts die Daten visuell erfassen kann. Da das Zusatzmodul zur Anzeige der Daten die Anzeigeeinheit des Endgeräts verwendet, muß es keine eigene Anzeigeeinheit aufweisen.

Alternativ wird vorgeschlagen, daß als Dienstfunktion bestimmte Daten auf einer Anzeigeeinheit des Zusatzmoduls angezeigt werden. Bei Endgeräten mit kleinen Anzeigeeinheiten kann es u. U. vorteilhaft sein, wenn eine größere Anzeigeeinheit zur Anzeige der Daten zur Verfügung steht. Eine grafikfähige Anzeigeeinheit des Zusatzmoduls kann eine sinnvolle Ergänzung zu einer nicht grafiktähigen Anzeigeeinheit eines Endgeräts darstellen.

Vorteilhafterweise wird als Dienstfunktion ein Computerspiel auf dem Zusatzmodul und/oder auf dem Endgerät ausgeführt. Die Anzeige des Computerspiels erfolgt auf einer Anzeigeeinheit des Zusatzmoduls oder des Endgeräts. Die Bedienung des Computerspiels erfolgt entweder über eine Tastatur des Zusatzmoduls oder über die Tastatur des Endgeräts. Die eigentliche Steuerung zur Ausführung des Computerspiels ist nicht Teil des Zusatzmoduls, sondern ist in der Steuerungseinrichtung des Telekommunikationsnetzwerks integriert. Die Bedienbefehle für das Computerspiel werden über das Zusatzmodul und das Endgerät an die Steuerungseinrichtung des Telekommunikationsnetzwerks gesendet. Dort wird der weitere Ablauf des Computerspiels berechnet und es werden die weiteren Schritte als Dienstfunktion veranlaßt. Dazu sendet die Steuerungseinrichtung bspw. einen Auftrag an die Diensterbringungseinrichtung, eine bestimmte Situation des Computerspiels auf einer Anzeigeeinheit darzustellen und/oder bestimmte akustische Geräusche auf einem Lautsprecher des Endgeräts oder des zusatzmoduls hervorzurufen.

Eine weitere Aufgabe der vorliegenden Erfindung besteht darin, ein Endgerät der eingangs genannten Art dahingehend auszugestalten und weiterzubilden, daß dem Endgerät durch das Zusatzmodul unter Ausnutzung der Übertragungsmöglichkeiten über das Telekommunikationsnetzwerk eine Vielzahl von zusätzlichen, über den reinen Aufbau einer Sprachverbindung hinausgehende, Dienstfunktionen zur Verfügung gestellt werden können.

Zur Lösung dieser Aufgabe schlägt die Erfindung ausgehend von dem Endgerät der eingangs genannten Art vor, daß das Endgerät aufweist:
- Mittel zum Empfangen der Daten, und
- Mittel zum Senden der Daten an eine Steuerungseinrichtung des Telekommunikationsnetzwerks.

Gemäß einer vorteilhaften Weiterbildung der Erfindung wird vorgeschlagen, daß das Zusatzmodul in die Aufnahmeeinrichtung des Endgeräts einsteckbar ist. Vorteilhafterweise ist das Zusatzmodul kartenförmig ausgebildet.

Eine weitere Aufgabe der vorliegenden Erfindung besteht darin, eine Steuerungseinrichtung der eingangs genannten Art dahingehend auszugestalten und weiterzubilden, daß die Steuerungseinrichtung aufgrund von physikalischen Daten, die sie von einem Endgerät des Telekommunikationsnetzwerks empfängt, dem Endgerät eine Vielzahl von zusätzlichen, über den reinen Aufbau einer Sprachverbindung hinausgehende, Dienstfunktionen zur Verfügung stellen kann.

Zur Lösung dieser Aufgabe schlägt die Erfindung ausgehend von der Steuerungseinrichtung der eingangs genannten Art vor, daß die Steuerungseinrichtung aufweist:
- Mittel zum Empfangen physikalischer Daten von einem Endgerät zum Einsatz in dem Telekommunikationsnetzwerk, und
- Mittel zum Senden eines Auftrags zur Erbringung einer Dienstfunktion an eine Diensterbringungseinrichtung beim Vorliegen einer vorbestimmten Konstellation der empfangenen Daten.

Gemäß einer vorteilhaften Weiterbildung der vorliegenden Erfindung wird vorgeschlagen, daß das Telekommunikationsnetzwerk als ein Intelligentes Netzwerk (IN) ausgebildet ist, wobei die Steuerungseinrichtung bestimmte Netzwerkfunktionen des Telekommunikationsnetzwerks steuert.

Es ist schließlich eine weitere Aufgabe der vorliegenden Erfindung, eine Diensterbringungseinrichtung der eingangs genannten Art dahingehend auszugestalten und weiterzubilden, daß die Diensterbringungseinrichtung aufgrund eines Auftrags, den sie von einer Steuerungseinrichtung des Telekommunikationsnetzwerks empfängt, dem Endgerät eine zusätzliche, über den reinen Aufbau einer Sprachverbindung hinausgehende, Dienstfunktion zur Verfügung stellen kann.

Zur Lösung dieser Aufgabe schlägt die Erfindung ausgehend von der Diensterbringungsvorrichtung der eingangs genannten Art vor, daß die Diensterbringungsvorrichtung aufweist:
- Mittel zum Empfangen eines Auftrags zur Erbringung der Dienstfunktion von einer Steuerungseinrichtung des Telekommunikationsnetzwerks, und
- Mittel zum Erbringen der Dienstfunktion.

Eine bevorzugte Ausführungsform der vorliegenden Erfindung wird im Folgenden anhand der Zeichnung näher erläutert. Es zeigt:

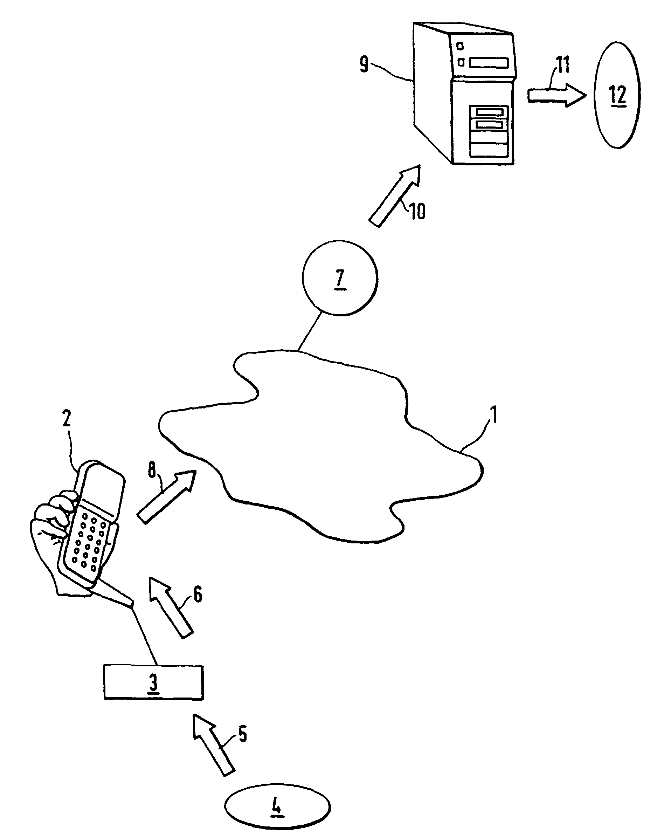

- Fig. 1: einen schematisches Ablaufdiagramm eines erfindungsgemäßen Verfahrens gemäß einer bevorzugten Ausführungsform.

In Fig. 1 ist ein schematisches Ablaufdiagramm eines erfindungsgemäßen Verfahrens dargestellt. Das dargestellte Verfahren dient zum Erbringen von Dienstfunktionen in einem Telekommunikationsnetzwerk 1. Das Telekommunikationsnetzwerk 1 ist vorzugsweise als ein sog. Intelligentes Netzwerk ausgebildet, das eine Steuerungseinrichtung 7 aufweist, die bestimmte Netzwerkfunktionen des Telekommunikationsnetzwerks 1 steuert. Das Erbringen der Dienstfunktionen erfolgt mit Hilfe eines Endgeräts 2, das mit einem Zusatzmodul 3 versehen ist. Das Verfahren umfaßt die nachfolgenden Schritte:

Zunächst werden physikalische Daten 4 durch das Zusatzmodul 3 erfaßt. Die Erfassung der Daten 4 ist in Fig. 1 mit dem Bezugszeichen 5 gekennzeichnet. Die physikalischen Daten 4 sind bspw. als GPS-Daten ausgebildet. Dazu weist das Zusatzmodul 3 vorzugsweise einen GPS-Empfänger (nicht dargestellt) auf. Die physikalischen Daten 4 können auch als Erschütterungswerte ausgebildet sein, denen das Zusatzmodul 3 ausgesetzt ist. Dazu weist das Zusatzmodul 3 vorzugsweise einen Beschleunigungssensor (nicht dargestellt) auf. Die physikalischen Daten 4 können auch aus einer Kombination unterschiedlicher Daten bestehen.

Die physikalischen Daten werden dann von dem Zusatzmodul 3 an das Endgerät 2 übertragen. Diese Übertragung der physikalischen Daten 4 ist in Fig. 1 mit dem Bezugszeichen 6 bezeichnet. Die physikalischen Daten 4 werden von dem Endgerät 2 empfangen.

Das Endgerät 2 sendet die Daten 4 an die Steuerungseinrichtung 7 des Telekommunikationsnetzwerks 1. Die Daten 4 werden über das Telekommunikationsnetzwerk 1 von dem Endgerät 2 an die Steuerungseinrichtung 7 gesendet. Das Senden der Daten 4 ist in Fig. 1 mit dem Bezugszeichen 8 bezeichnet. Falls das Endgerät 2 als ein GSM-Mobiltelefon ausgebildet ist, werden die Daten 4 vorzugsweise über einen Datenkanal des Telekommunikationsnetzwerks 1 an die Steuerungseinrichtung 7 gesendet. Die Steuerungseinrichtung 7 empfängt die Daten 4.

Die Steuerungseinrichtung 7 überprüft, ob eine vorbestimmte Konstellation der empfangenen Daten 4 vorliegt. Dazu werden die empfangenen physikalischen Daten 4 bspw. mit Daten verglichen, die in dem Telekommunikationsnetzwerk 1 gespeichert sind und auf die die Steuerungseinrichtung 7 Zugriff hat. Falls eine vorbestimmte Konstellation der empfangenen Daten 4 vorliegt, sendet die Steuerungseinrichtung 7 einen Auftrag zur Erbringung 11 einer Dienstfunktion 12 an eine Diensterbringungseinrichtung 9. Das Senden des Auftrags ist in Fig. 1 mit dem Bezugszeichen 10 bezeichnet. Ob ein Auftrag gesendet und welche Art von Dienstfunktion 12 bereitgestellt werden soll, wird durch die Steuerungseinrichtung 7 bestimmt.

Die Diensterbringungseinrichtung 9 empfängt den Auftrag und erbringt die auftragsgemäße Dienstfunktion 12. Das Erbringen der Dienstfunktion 12 ist in Fig. 1 mit dem Bezugszeichen 11 bezeichnet. Die Art der zu erbringenden Dienstfunktion 12 kann ganz unterschiedlich ausgebildet sein. Die Art der Dienstfunktion 12 hängt in der Regel von der Art der empfangenen physikalischen Daten 4 ab. Wenn bspw. medizinische Daten eines Benutzers des Endgeräts 2 empfangen werden, kann die Dienstfunktion 12 darin bestehen, eine Notrufzentrale zu benachrichtigen, falls die empfangenen medizinischen Daten über eine bestimmte Toleranzgrenze hinaus von vorgegebenen Daten abweichen. Falls als physikalische Daten 4 auch die geografischen Ortskoordinaten des Benutzers an die Steuerungseinrichtung 7 gesendet werden, kann die Dienstfunktion 12 im Rahmen des Notrufs auch eine Übermittlung der momentanen Position des Benutzers umfassen.

## Patentansprüche

1. Verfahren zum Erbringen von Dienstfunktionen in einem Telekommunikationsnetzwerk (1) mit Hilfe eines Endgeräts (2), das mit einem Zusatzmodul (3) versehen ist, **gekennzeichnet durch** die nachfolgenden Schritte:
- Erfassung (5) physikalischer Daten (4) durch das Zusatzmodul (3),
- Übertragung (6) der Daten (4) an das Endgerät (2) durch das Zusatzmodul (3),
- Empfang der Daten (4) durch das Endgerät (2),
- Senden (8) der Daten (4) an eine Steuerungseinrichtung (7) des Telekommunikationsnetzwerks (1) über das Telekommunikationsnetzwerk (1) durch das Endgerät (2),
- Empfang der Daten durch die Steuerungseinrichtung (7,
- Senden (10) eines Auftrags zur Erbringung (11) einer Dienstfunktion (12) an eine Diensterbringungseinrichtung (9) durch die Steuerungseinrichtung (7) beim Vorliegen einer vorbestimmten Konstellation der empfangenen Daten (4),
- Empfang des Auftrags durch die Diensterbringungseinrichtung (9), und
- Erbringen (11) der Dienstfunktion (12) durch die Diensterbringungseinrichtung (9).

2. Verfahren nach Anspruch 1, dadurch gekennzeichnet, daß die empfangenen physikalischen Daten (4) in der Steuerungseinrichtung (7) mit Daten verglichen werden, die in dem Telekommunikationsnetzwerk (1) gespeichert sind und auf die die Steuerungseinrichtung (7) Zugriff hat, um festzustellen, ob eine vorbestimmte Konstellation der empfangenen Daten (4) vorliegt.

3. Verfahren nach Anspruch 1 oder 2, dadurch gekennzeichnet, daß die geografischen Ortskoordinaten des Zusatzmoduls (3) als physikalische Daten (4) erfasst werden.

4. Verfahren nach einem der Ansprüche 1 bis 3, dadurch gekennzeichnet, daß Erschütterungen des Zusatzmoduls (3) als physikalische Daten (4) erfasst werden.

5. Verfahren nach einem der Ansprüche 1 bis 3, dadurch gekennzeichnet, daß Umweltdaten als physikalische Daten (4) erfasst werden.

6. Verfahren nach Anspruch 5, dadurch gekennzeichnet, daß Wetterdaten als physikalische Daten (4) erfasst werden.

7. Verfahren nach einem der Ansprüche 1 bis 3, dadurch gekennzeichnet, daß medizinische Daten eines Benutzers des Endgeräts (2) als physikalische Daten (4) erfaßt werden.

8. Verfahren nach einem der Ansprüche 1 bis 7, dadurch gekennzeichnet, daß als Dienstfunktion (12) ein Kontrallanruf an einen weiteren Benutzer eines weiteren Endgeräts in dem Bereich, in dem sich das Zusatzmodul (3) befindet, ausgeführt wird.

9. Verfahren nach einem der Ansprüche 1 bis 8, dadurch gekennzeichnet, daß als Dienstfunktion (12) eine Notrufzentrale benachrichtigt wird.

10. Verfahren nach Anspruch 3, dadurch gekennzeichnet, daß als Dienstfunktion (12) Verkehrsinformationen bezüglich des Bereiches, in dem sich das Zusatzmodul (3) befindet, übermittelt werden.

11. Verfahren nach Anspruch 10, dadurch gekennzeichnet, daß als Dienstfunktion (12) ein Zugfahrplan in dem Bereich, in dem sich das Zusatzmodul (3) befindet, übermittelt wird.

12. Verfahren nach Anspruch 10, dadurch gekennzeichnet, daß als Dienstfunktion (12) allgemeine Informationen über den Bereich, in dem sich das Zusatzmodul (3) befindet, übermittelt werden.

13. Verfahren nach einem der Ansprüche 1 bis 12, dadurch gekennzeichnet, daß als Dienstfunktion (12) bestimmte Daten auf einer Anzeigeeinheit des Endgeräts (2) angezeigt werden.

14. Verfahren nach einem der Ansprüche 1 bis 13, dadurch gekennzeichnet, daß als Dienstfunktion (12) bestimmte Daten auf einer Anzeigeeinheit des Zusatzmoduls (3) angezeigt werden.

15. Verfahren nach einem der Ansprüche 1 bis 14, dadurch gekennzeichnet, daß als Dienstfunktion (12) ein Computerspiel auf dem Zusatzmodul (3) und/oder auf dem Endgerät (2) ausgeführt wird.

16. Endgerät (2) für den Einsatz in einem Telekommunikationsnetzwerk (1), mit einer Aufnahmeeinrichtung für ein Zusatzmodul (3), mit dem physikalische Daten (4) erfaßt werden können, **dadurch gekennzeichnet,** daß das Endgerät (2) aufweist:
- Mittel zum Empfangen der Daten (4), und
- Mittel zum Senden (8) der Daten (4) an eine Steuerungseinrichtung (7) des Telekommunikationsnetzwerks (1).

17. Endgerät (2) nach Anspruch 16, dadurch gekennzeichnet, daß das Zusatzmodul (3) in die Aufnahmeeinrichtung des Endgeräts (2) einsteckbar ist.

18. Endgerät (2) nach Anspruch 17, dadurch gekennzeichnet, daß das Zusatzmodul (3) kartenförmig ausgebildet ist.

19. Steuerungseinrichtung (7) eines Telekommunikationsnetzwerks (1), **dadurch gekennzeichnet,** daß die Steuerungseinrichtung (7) aufweist:
- Mittel zum Empfangen physikalischer Daten (4) von einem Endgerät (2) zum Einsatz in dem Telekommunikationsnetzwerk (1), und
- Mittel zum Senden (10) eines Auftrags zur Erbringung (11) einer Dienstfunktion (12) an eine Diensterbringungseinrichtung (9) beim Vorliegen einer vorbestimmten Konstellation der empfangenen Daten (4).

20. Steuerungseinrichtung (7) nach Anspruch 19, dadurch gekennzeichnet, daß das Telekommunikationsnetzwerk (1) als ein Intelligentes Netzwerk (IN) ausgebildet ist, wobei die Steuerungseinrichtung (7) bestimmte Netzwerkfunktionen des Telekommunikationsnetzwerks (1) steuert.

21. Diensterbringungseinrichtung (9) zum Erbringen (11) einer Dienstfunktion (12), **dadurch gekennzeichnet**, daß die Diensterbringungseinrichtung (9) aufweist:
- Mittel zum Empfangen eines Auftrags zur Erbringung (11) der Dienstfunktion (12) von einer Steuerungseinrichtung (7) des Telekommunikationsnetzwerks (1), und
- Mittel zum Erbringen (11) der Dienstfunktion.
